# EUROPEAN PATENT APPLICATION

(11) **EP 4 082 958 A1**
(43) Date of publication of application: **02.11.2022**
(21) Application number: 22171096.5
(22) Date of filing: 02.05.2022
(51) Int. Cl.: B66F 3/46, B66F 7/28, B66F 17/00

(54) **LIFT WITH HALO LIGHT**

(30) Priority: 30.04.2021 US 202163182090 P; 27.04.2022 US 202217730819
(71) Applicant: Vehicle Service Group, LLC, Madison, IN 47250 (US)
(72) Inventor: SPILLER, Doug, Madison, 47250 (US); ASHWORTH, Jay, Madison, 47250 (US); KATERBURG, Kevin, Madison, 47250 (US); SMITH, Darian, Madison, 47250 (US); DEUERLING, Austin, Madison, 47250 (US)
(74) Representative: Samson & Partner Patentanwälte mbB

(57) **Abstract**

A vehicle lift assembly includes a control unit and a first lift device. The first lift device includes a lifting carriage, a lift actuation assembly that can actuate the lifting carriage between a lowered position and a raised position, and an indicator assembly (340). The indicator assembly can generate a visual indicator (342) on a surface proximal to the first lift device under control of the control unit, such as one selected as a function of a state of the first lift device.

## Description

### BACKGROUND

Vehicle lift systems may be used to lift various kinds of vehicles relative to the ground. Some vehicle lift systems are formed by a set of mobile, above-ground lift columns. An example of a mobile column lift system is the MCHW18 Mobile Column Lift System by Rotary Lift of Madison, Indiana. The mobile columns may be readily positioned in relation to the vehicle, then be activated to lift the vehicle from the ground in a coordinated/synchronized fashion. The mobile columns may be controlled through wireless communication with a wireless control center associated with each mobile column in order to perform a synchronized lift. While a variety of systems and configurations have been made and used to control lift systems, it is believed that no one prior to the inventors has made or used the invention described herein.

### BRIEF DESCRIPTION OF THE DRAWINGS

While the specification concludes with claims which particularly point out and distinctly claim the invention, it is believed the present invention will be better understood from the following description of certain examples taken in conjunction with the accompanying drawings, in which like reference numerals identify the same elements and in which:
FIG. 1 shows a perspective view of an exemplary lift column;
FIG. 2A shows a perspective view of an exemplary lift system engaging a vehicle in a lowered position;
FIG. 2B shows a perspective view of the exemplary lift system of FIG. 2A engaging the vehicle in a raised position;
FIG. 2C shows a schematic diagram of the lift system of FIG. 2A;
FIG. 3 shows an elevation view of the lift column of FIG. 1 being charged by a wireless charging assembly;
FIG. 4A shows a top plan view of the vehicle lift system of FIG. 2A, where a plurality of lift columns is positioned to suitably engage a vehicle;
FIG. 4B shows a top plan view of the vehicle lift system of FIG. 2A, where the plurality of lift columns is in a nested position and resting on top of a charging mat of the wireless charging assembly;
FIG. 5 shows a perspective view of another exemplary lift column that may be readily incorporated into the lift system of FIG. 2A;
FIG. 6 shows a perspective view of a plurality of lift columns of FIG. 5 charging in a nested position; and
FIG. 7 shows a perspective view of another exemplary lift column that may be readily incorporated into the lift system of FIG. 2A, where the lift column includes a halo indicator light.

The drawings are not intended to be limiting in any way, and it is contemplated that various embodiments of the technology may be carried out in a variety of other ways, including those not necessarily depicted in the drawings. The accompanying drawings incorporated in and forming a part of the specification illustrate several aspects of the present technology, and together with the description explain the principles of the technology; it being understood, however, that this technology is not limited to the precise arrangements shown.

### DETAILED DESCRIPTION

The following description of certain examples should not be used to limit the scope of the present invention. Other examples, features, aspects, embodiments, and advantages of the invention will become apparent to those skilled in the art from the following description, which is by way of illustration, one of the best modes contemplated for carrying out the invention. As will be realized, the invention is capable of other different and obvious aspects, all without departing from the invention. Accordingly, the drawings and descriptions should be regarded as illustrative in nature and not restrictive.

### I. Mobile Column Lift System Overview

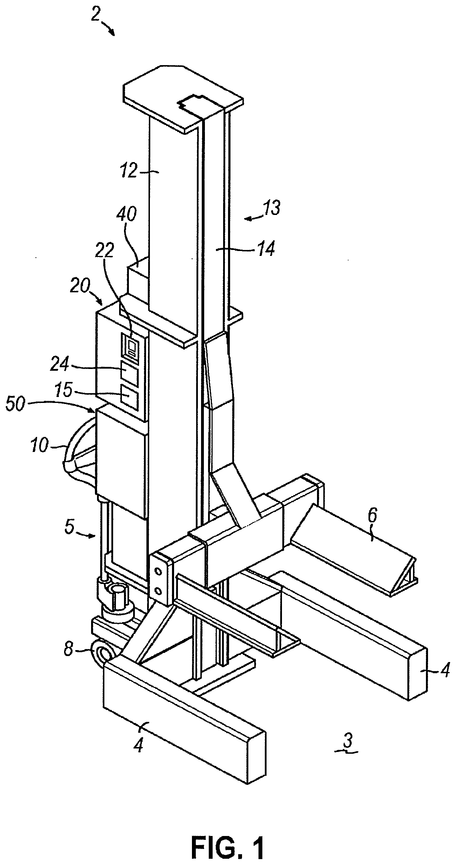

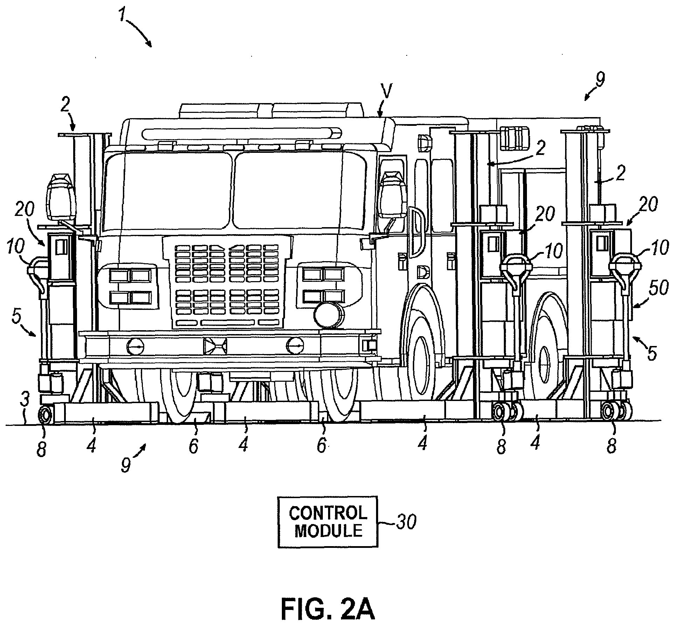

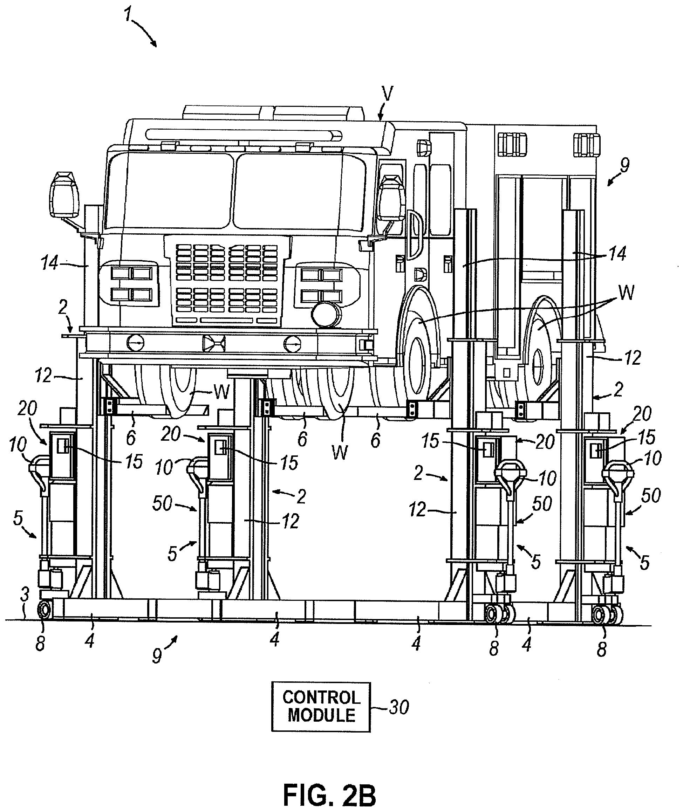

FIG. 1 illustrates an exemplary mobile lifting column (2), while FIGS. 2A-2C illustrate an exemplary lift system (1), which includes a centralized control module (30) and pairs of lifting columns (2) forming a plurality of lift subsystems (9). As best shown between FIGS. 2A-2B, control module (30) is operable to control lifting columns (2) to selectively raise or lower a vehicle (V) relative to the ground, such as a shop floor (3). While two lift subsystems (9) and four columns (2) are shown, it should be understood that any other suitable number of lift subsystems (9) and columns (2) (e.g., three, six, eight, etc.) may be used to form lift system (1).

As best seen in FIG. 1, each lifting column (2) includes a set of legs (4), a hydraulic system (5), a lift carriage (6), wheels (8), a handle (10), a vertically extending guidepost (12), a carriage guide rail (14), a locking assembly (13), a wireless transceiver (15), a control interface (20), a sensor assembly (24), an indicator (40), and a power assembly (50). As will be described in greater detail below, lifting columns (2) are suitably mobile such that an operator may readily move columns (2) around shop floor (3) in order to form customizable lift subsystems (9) while maintaining the capability of raising and lowering vehicle (V) relative to the shop floor (3).

Legs (4) support lifting column (2) in relation to the ground, such as a shop floor (3). Wheels (8) and handles (10) of columns (2) permit columns (2) to be moved along shop floor (3) for both storage purposes and exemplary use. For instance, columns (2) may be positioned into customizable lift subsystems (9) to lift vehicles that vary in their number of axles and/or axle spacings. Additionally, or alternatively, when not in use, columns (2) may be positioned into a storage configuration in order to utilize the shop floor (3) as otherwise desired, taken to another location for maintenance or other suitable reasons. Other suitable positioning configurations may be utilized as would be apparent to one skilled in the art in view of the teachings herein.

Each column (2) further includes hydraulic system (5), which is operable to vertically acuate carriage (6) and rail (14) relative to guidepost (12) and shop floor (3). As best shown between FIGS. 2A-2B, carriage (6) is configured to engage a component of the vehicle (e.g., the wheel (W), etc.), to thereby raise and lower the vehicle (V) relative to the ground (3). Carriage (6) is fixed to rail (14) such that carriage (6) and rail (14) are raised and lowered together relative to guidepost (12).

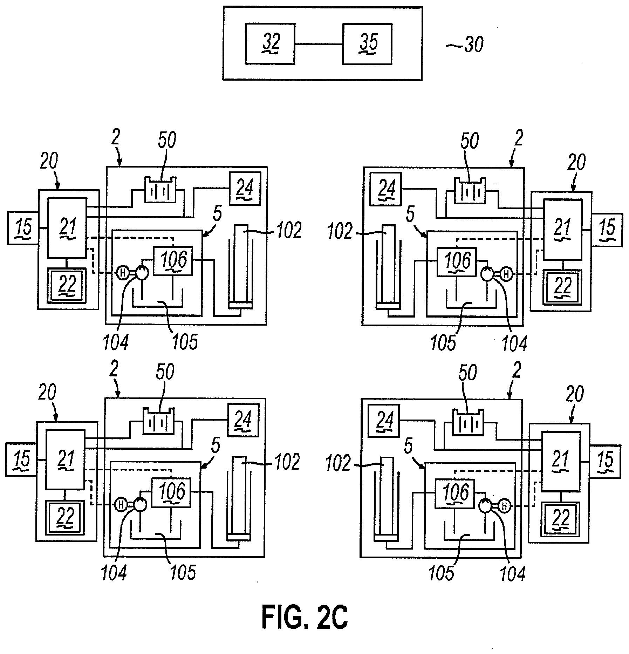

In the embodiment illustrated in FIG. 2C, each hydraulic system (5) of the present example includes a hydraulic cylinder and piston (102), a pump (104), and a series of valves (106) controlling the flow of hydraulic fluid stored within a reservoir (105). In particular, pump (104) and valves (106) are in fluid communication with hydraulic cylinder and piston (102), such that pump (104) and valves (106) communicate fluid to or from cylinder and piston (102). Carriage (6) ascends and descends with the piston of hydraulic cylinder and piston (102), such that pump (104) and valves (106) may be controlled to control the vertical height at which carriage (6) is positioned relative to guidepost (12) and shop floor (3). A processor (21) of control interface (20) is in electrical communication with pump (104) and valves (106) to control operation of pump (104) and valves (106). Of course, any other suitable structures, components, or techniques may be used for a hydraulic system (5) as will occur to those skilled in the art. For instance, any suitable systems, features, mechanisms, or components may be used in addition to or in lieu of hydraulic system (5), including but not limited to a screw mechanism, such as to raise or lower carriage (6).

Each lift column (2) further includes a control interface (20), which may be used to control the operation, monitoring, and/or programming of lift system (1). Control interface (20) is in communication with a respective processor (21), which is operable to process and relate information/commands to/from control interface (20). Additionally, display (22) may be configured to display any suitable information related to column (2) and/or lift system (1) as would be apparent to one skilled in the art in view of the teachings herein. In this illustrated embodiment, wireless transceiver (15) is also provided at each column (2) and is operable to wirelessly transmit information and commands between that column (2) and centralized control module (30). In some instances, wireless transceivers (15) may be operable to wirelessly transmit information and commands directly between columns (2) via respective transceivers (15).

By way of example only, control interface (20) may be configured and operable in accordance with at least some of the teachings of U.S. Pat. No. 8,083,034, entitled "Lift Control Interface," issued December 27, 2011, the disclosure of which is hereby incorporated by reference herein. As another merely illustrative example, control interface (20) and/or other aspects of lift system (1) may be configured and operable in accordance with at least some of the teachings of U.S. Pat. No. 6,983,196, entitled "Electronically Controlled Vehicle Lift and Vehicle Service System," issued January 3, 2006, the disclosure of which is hereby incorporated by reference herein.

Additionally, or alternatively, central control module (30) may be used to control the operation, monitoring, and/or programming of lift system (1). Control module (30) includes a wireless transceiver (35), and a processor (32). Similar to wireless transceivers (15) described above, wireless transceiver (35) is operable to wirelessly relay information and commands directly to columns (2) in lift system (1) via respective transceivers (15). Similar to processors (21) described above, processor (32) is operable to process and relate information/commands to/from control interface (20) via wireless transceivers (35, 15).

Centralized control module (30) may take on any suitable structure as would be apparent to one skilled in the art in view of the teachings herein. For instance, centralized control module (30) may be located in an upright console unit (e.g., configured like a podium) mounted to the shop floor (3) or on a wall. As another merely illustrative example, centralized control module (30) may be provided in a wired or wireless handheld pendant or other form of handheld control. For instance, control module (30) may be incorporated into a handheld control similar to the one disclosed in PCT Application PCT/US16/58254, entitled "Setup and Control of a Wireless Lift System," the disclosure of which is hereby incorporated by reference herein. As another merely illustrative example, control module (30) may be incorporated into a handheld control similar to the one disclosed in U.S. Patent No. 9,908,764, entitled "Handheld Control Unit for Automotive Lift," the disclosure of which is hereby incorporated by reference herein. As yet another merely illustrative example, centralized control module (30) may be provided through a program on a conventional multipurpose computing device such as a smartphone, laptop PC, desktop PC, etc. As yet another merely illustrative example, control module (30) may be provided through a remote server or some other remote device, such that control module (30) may communicate with columns (2) via various kinds of public networks (e.g., the internet) and/or private networks (e.g., WANs, LANs, VPNs, etc.). Various suitable forms that control module (30) may take will be apparent to those of ordinary skill in the art in view of the teachings herein.

Various suitable forms that wireless transceiver (15, 35) may take, including without limitation BLUETOOTH, WI-FI, ZIGBEE-compliant, and other wireless transceivers and hardware, and a variety of lift types to which they can be applied will be apparent to those of ordinary skill in the art in view of the teachings herein. As an alternative to wireless communication, cables may be used to provide wired communication of information/commands between each column (2) and centralized control module (30).

As mentioned above, each column (2) may include a locking assembly (13), which may be formed from suitable components associated with guidepost (12), carriage (6), and rail (14). Locking assembly (13) may be configured to selectively support the weight of the vehicle (V) by the mechanical structure of column (2) rather than the hydraulic system (5). Any suitable components may be used for form locking assembly (13) as would be apparent to one skilled in the art in view of the teachings herein.

In some systems, centralized control module (30) can receive an operator command to lower the carriage (6) of each column (2) to a position where the weight of the vehicle (V) is supported by locking assemblies (13), rather than the hydraulic system (5). Likewise, centralized control module (30) can receive an operator command to raise the carriage (6) of each column (2) out of the locked position so that the hydraulic system again supports the weight of the vehicle. In some embodiments, this locking/unlocking functionality operates as described in US Patent No. 10,081,523, and titled "Load Indicator for Vehicle Lift," while other implementations and embodiments will occur to those skilled in the art in view of this disclosure.

As described above, column (2) may be in the locked position when carriage (6) has been lowered to fully engage locking assembly (13). When in this position, the hydraulic fluid in hydraulic system (5) may be at least partially relieved of pressure. In other words, the load carried by column (2) may be shifted from being supported by a hydraulic system (5) to being at least partially supported by a locking assembly (13). In this mode of operation, pressure in hydraulic system (5) and the rest of the hydraulic circuit may act to indicate whether column (2) is in a locked state. When the pressure in the hydraulic circuit is relatively high, this may indicate that the hydraulic circuit is bearing the weight of the lifted vehicle (V), which may further indicate that column (2) is in an unlocked state. When the pressure in the hydraulic circuit is relatively low, this may indicate that the mechanical components of locking assembly (13) are bearing the weight of the lifted vehicle, which may further indicate that column (2) is in a locked state.

As mentioned above, column (2) may further include sensor assembly (24). Sensor assembly (24) may be in communication with the corresponding processor (21). Sensor assembly (24) may be attached to column (2) in such a way as to measure any suitable characteristics of column (2) during exemplary use, as would be apparent to one skilled in the art in view of the teaching herein.

For instance, sensor assembly (24) may include a sensor configured to measure the pressure within hydraulic system (5). In such an instance, processor (21) may be in communication with said sensor such that processor (21) is configured to use the measured pressure within hydraulic system (5) to help determine whether locking assembly (13) is in the locked state or the unlocked state in accordance with the description above.

As another example, sensor assembly (24) may include a sensor configured to measure the load on carriage (6) during exemplary use of lift system (1). In such an instance, processor (21) may be configured to calculate sudden changes in the load on carriage (6) based on data from the weight sensor. If processor (21) calculates a sudden change in the load on carriage (6) based on data from weight sensor, processor (21) may signal an error message to control module (30), which would further transmit the error message to all other columns (2), in response to which system (1) changes to a secure, stopped state to prevent raising or lowering of carriages (6). This feature may be utilized in case an object obstructs system (1) from raising or lowering a vehicle. This feature may also be utilized if there is a sudden shift in loads between different columns (2) in system (1). This feature may be utilized in any suitable manner that may occur to one having ordinary skill in the art in view of the teachings herein. Of course, this feature may be utilized by measuring pressure within hydraulic system (5) rather than the load on carriage (6).

Each lift column (2) further includes an indicator (40) connected with control interface (20). Indicator (40) may include a light, a speaker, or any other suitable form of communication to signal a message or information to those in the vicinity of lift column (2). Indicator (40) may be activated in response to information delivered from various kinds of sensors. Indicator (40) may communicate any suitable message as would be apparent to one skilled in the art in view of the teachings herein. For example, indicator (40) may light up a first color to indicate locking assembly (13) is in the locked state; while indicator (40) may light up a second color to indicate locking assembly (13) is in the unlocked state. Further, as another example, indicator (40) may be configured to flash, or light up a third color, to indicate an object is obstructing lift system (1).

Each column (2) includes a respective power assembly (50) operable to power some or all aspects of operation of their respective columns (2). In particular, each power assembly (50) may be operable to power the pump (104), control interface (20), indicator (40), sensor assembly (24), transceiver (15), and any other electrically powered component in each column (2). By way of example only, such operability may be provided in accordance with at least some of the teachings of U.S. Patent App. No. 14/080,240, entitled "Vehicle Lift with Locally Stored Energy Source," filed November 14, 2013, the disclosure of which is hereby incorporated by reference herein.

In addition, or in the alternative, at least part of each column (2) may receive power from an external source via one or more wires or in some other suitable fashion. In addition, or in the alternative, each column (2) may receive power via one or more wires from another column (2) to form a chain of columns, while one column (2) receives power from an external power source via one or more wires, and all other columns receive power from the external power source indirectly via the chain of columns connected to each other via wires.

As will be described in greater detail below, power assembly (50) in the illustrated embodiment is rechargeable. As will also be described in greater detail below, some or all power assemblies (50) of mobile lift columns (2) may be configured to be rechargeable via wireless charging.

### II. Exemplary Wireless Charging of Mobile Lifts

As noted above, power assembly (50) of each mobile lift column (2) is rechargeable. In particular, as will be described in greater detail below, power assembly (50) is rechargeable via a wireless charging assembly (60) that may be readily installed in a workshop. Due to the wireless charging capabilities of wireless charging assembly (60), an operator may simply place a lift column (2) over a wireless charging mat (64) resting on shop floor (3), thereby allowing wireless charging assembly (60) to recharge power assembly (50). Therefore, wireless charging assembly (60) may be configured to initiate charging of a power assembly (50) quickly and easily without requiring an operator to make a physical connection via power assembly (50) and a power line. Additionally, with the use of a wireless charging mat (64), an operator may quickly confirm suitable placement of lift column (2) relative to wireless charging assembly (60) for wireless charging purposes simply by visually confirming mobile lift column (2) is placed over/adjacent to charging mat (64).

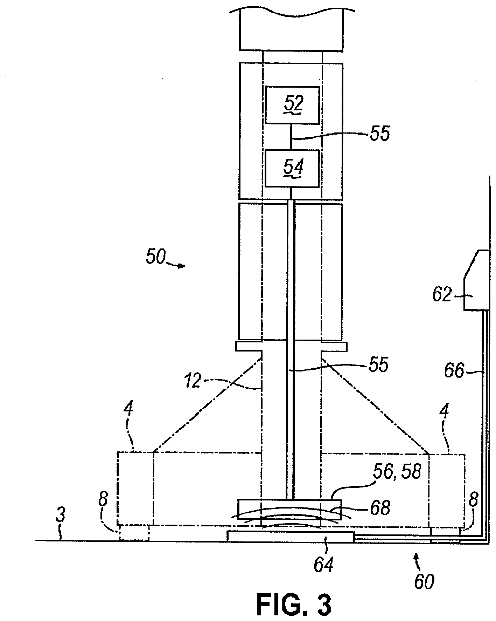

As best shown in FIG. 3, power assembly (50) includes a battery (52), an on-board charging assembly (54), and a lift-side wireless docking station (56) that further includes an inductive power receiving coil (58). Further, wireless charging assembly (60) includes an interface (62) in electrical communication with wireless charging mat (64) via an electrical coupling (66). Battery (52) is rechargeable and configured to power various aspects of mobile lift column (2). Battery (52) may include any suitable components as would be apparent to one skilled in the art in view of the teachings herein.

Battery (52) is in electrical communication with on-board charging assembly (54) via suitable electrical wiring (54). On-board charging assembly (54) is also in electrical communication with lift-side wireless docking station (56). As will be described in greater detail below, on-board charging assembly (54) is configured to receive electrical energy from lift-side wireless docking station (56). On-board charging assembly (54) is configured to suitably transmit the electrical energy received from lift-side wireless docking station (56) in order to suitably charge battery (52).

On-board charging assembly (54) may include circuitry configured to recognize when battery (52) has reached a particular level of charge, to determine when battery (52) needs further charging, or to detect the current level of charge and/or capacity of battery (52). On-board charging assembly (54) may be operable to implement thermal monitoring, battery cell balancing, reverse polarity protection, overcharge protection, and similar features that would occur to those skilled in the art in view of this disclosure additionally, on-board charging assembly (54) may include circuity configured to recognize when lift-side wireless docking station (56) is suitably adjacent to or has established a wireless connection with wireless charging mat (64). Additionally, on-board charging assembly (54) may be in communication with indicator (40), transceiver (15) (or any other suitable component of column (2)/lift system (1)), such that indicator (40) may notify an operator when (A) wireless charging assembly (60) is suitably coupled with power assembly (50) for charging purposes, (B) power assembly (50) is fully charged, (C) power assembly (50) is partially charged (and to what degree), (D) power assembly (50) has no charge or will not operate well if deployed for immediate use, or any other suitable status update as would be apparent to one skilled in the art in view of the teachings herein.

In some instances, at least one column (2) may be configured to automatically move itself such that column (2) may automatically position itself on shop floor (3). Examples of such automatically moving columns may be found in U.S. Provisional App. 62/853,701, entitled "Automated Mobile Vehicle Lift Column," filed on May 28, 2019, which is incorporated by reference herein. In instances where at least one column (2) is configured to automatically move itself, suitable structures and controls of column (2) may determine when the battery life of said column (2) is low and automatically return to charging station (60). Additionally, or alternatively, such a column (2) may be configured to return to charging station (60) at a specified time of day, provided said column (2) is not actively lifting a vehicle.

As mentioned above, on-board charging assembly (54) is configured to receive electrical energy from lift-side wireless docking station (56). Lift-side wireless docking station (56) is housed within column (2) adjacent to legs (4) such that lift-side wireless docking station (56) is adjacent to-yet spaced apart from-shop floor (3). Placement of lift-side wireless docking station (56) on column (2) is configured such that docking station (56) is suitably adjacent to wireless charging mat (64) when column is moved over wireless charging mat (64). Lift-side wireless docking station (56) includes at least one inductive power receiving coil (58). When column (2) is placed over wireless charging mat (64), coil (58) is suitably close enough to wireless charging mat (64) such that time-varying electromagnetic fields (68) emitted by wireless charging mat (64) are received by coil (58) and transformed into electrical energy that is then communicated to on-board charging assembly (54), which utilizes the electrical energy in accordance with the description herein. Lift-side wireless docking station (56) may include any other suitable components as would occur to one skilled in the art in view of the teachings herein.

As mentioned above, wireless charging station (60) includes an interface (62) and a wireless charging mat (64) in electrical communication with each other via electrical coupling (66). Interface (62) is further electrically powered by a standard power source, such as a dedicated 240-volt circuit. Of course, any suitable power source may be utilized as would occur to one skilled in the art in view of the teachings herein. Interface (62) is configured to communicate electrical power provided by the standard power source to wireless charging mat (64). Therefore, interface (62) may include any suitable components as would occur to one skilled in the art in view of the teachings herein. Interface (62) may include any suitable operator inputs and/or display and/or interface in order to allow an operator to selectively activate/deactivate wireless charging assembly (60) and visually confirm that wireless charging assembly (60) is activated.

Wireless charging mat (64) is configured to utilize the electrical power provided by interface (62) and generate a time-varying electromagnetic field (68) that may be received and used by coil (58) in accordance with the description herein. Wireless charging mat (64) may be configured to rest on, lie underneath, or be embedded within shop floor (3) to suitably interact with lift-side wireless docking stations (56) of various power assemblies (50).

While in the current example, charging mat (64) is placed on shop floor (3) and lift-side wireless docking station (56) is placed near the base of columns (2), this is merely optional. For example, charging mat (64) may be mounted on a vertical wall, while docking station (56) may be placed along an exterior of a leg (4) such that an operator may place leg (4) adjacent to charging mat (64) mounted on vertical wall, thereby allowing wireless charging assembly (60) to suitably charge power assembly (50). As another example, charging mat (64) may be placed on shop floor (3) or a vertical wall, docking station (56) may be placed on some exterior portion of columns (2), and columns (2) may be further outfitted with inductive charging circuitry to enable power that is received from the charging mat (64) to be passed through to adjacent columns (2). Of course, any suitable placement of charging mat (64) and docking station (56) may be utilized as would be apparent to one skilled in the art in view of the teachings herein.

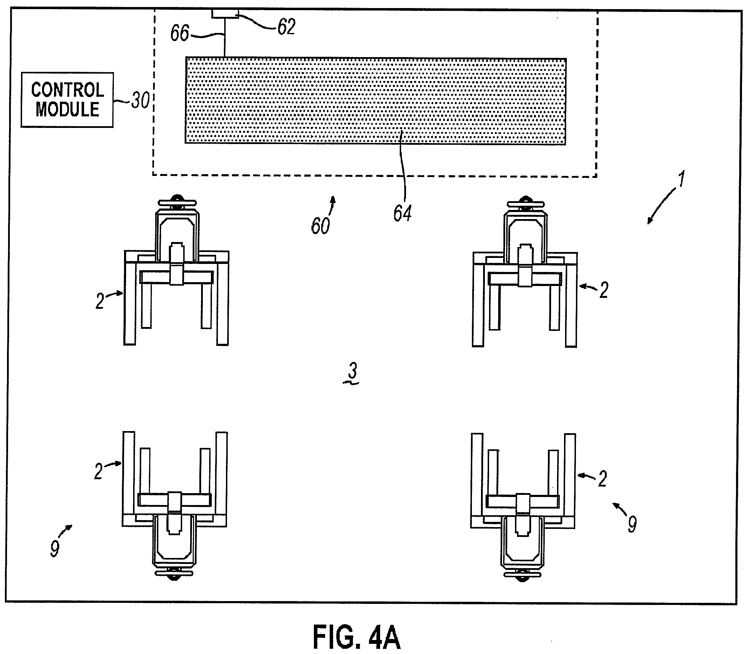

FIGS. 4A-4B show an example of wireless charging assembly (60) being used to charge a plurality of lift columns (2). First, as shown in FIG. 4A, lift columns (2) may be positioned on shop floor (3) and sub-arranged in subsystems (9) to lift a respective axle of a vehicle. It should be understood that, at the moment shown in FIG. 4A, an operator may drive a vehicle (V) on shop floor (3) between lift columns (2), suitably engage vehicle (V) with lift columns (2), and then raise and/or lower vehicle (V) utilizing lift columns (2) in accordance with the description herein.

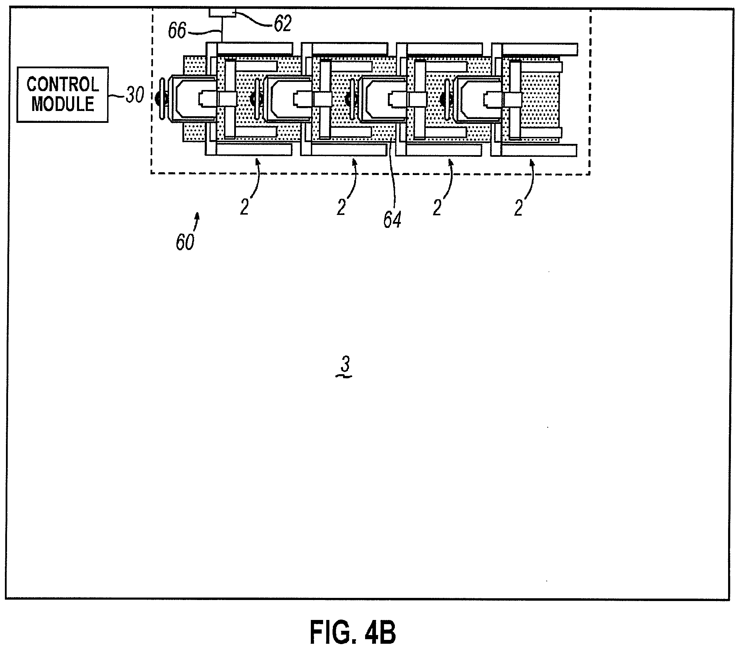

If an operator desires to charge lift columns (2) or otherwise no longer needs to use lift columns (2) such that columns (2) may be stored, the operator may move lift columns (2) to rest on wireless charging mat (64), as shown in FIG. 4B. Charging mat (64) in the current example is long enough to charge four columns (2) stored in a nested configuration. Charging mat (64) may have any length that would occur to one skilled in the art in view of the teachings herein. For example, charging mat (64) may have a length suitable for charging two columns (2), six columns (2), eight columns (2), etc.

With columns (2) resting on top of charging mat (64), power assemblies (50) of columns (2) may begin to suitably charge in accordance with the description herein. Once the operator moves columns (2) on top of charging mat (64), an activated charging assembly (60) may begin charging columns (2) with no further action by the operator. Therefore, the operator does not have to plug a power cord into lift column (2), which may save the operator time and may avoid columns (2) being unintentionally left in a depleted state because they were not plugged in at the end of a workday. After a suitable charge, in accordance with the description herein, the operator may move columns (2) back into a position similar to FIG. 4A in order to resume lifting functionalities. An indicator on interface (62) (or elsewhere, as may occur to one skilled in the art in view of this disclosure) may indicate when charging is complete.

When charging mat (64) is located on shop floor (3) or an adjacent wall close to shop floor (3), lift-side wirelessing docking stations (56) may be able to get closer to wireless charging mat (64) than a wireless charging system that may be associated with the ceiling. Therefore, the charging strength of charging mat (64) and lift-side wireless docking stations (56) may be stronger, reducing the amount of charging time required to suitably charge power assembly (50) compared to a wireless charging system placed farther away.

Similarly, the use of wireless charging via inductive power-receiving coils (58) and time-varying electromagnetic fields (68) may also reduce the amount of charging time required to suitably charge power assembly (50) compared to other wireless charging configurations, such as optical charging.

While in the current example, charging mat (64) is dimensioned in a rectangular fashion to charge columns (2) in a nested configuration, charging mat (64) may have any suitable geometry as would be apparent to one skilled in the art in view of the teachings herein. For example, charging mat (64) may have a circular shape, a square shape, a triangular shape, etc. Additionally, while in the current example charging mat (64) is one singular mat configured to receive four lift column (2), charging mat (64) may have multiple mini-mats that are electrically connected to each other. In some instances, each mini-mat is sized suitably to charge a single lift column (2) or a pair of lift columns (2). Therefore, an operator may place each mini-mat at a designated location for storage and charging of lift columns (2), thereby allowing the operator to choose the positioning of each lift column (2) on shop floor (3) when columns (2) are being charged.

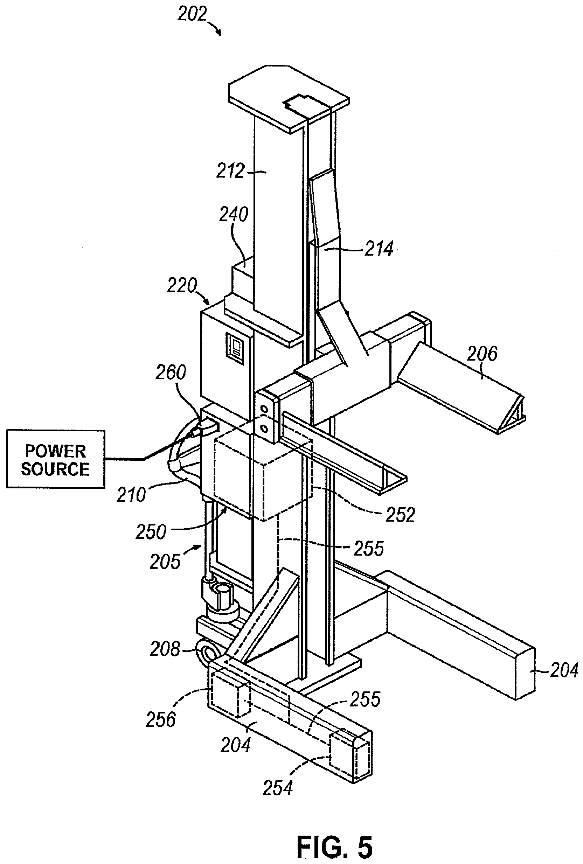

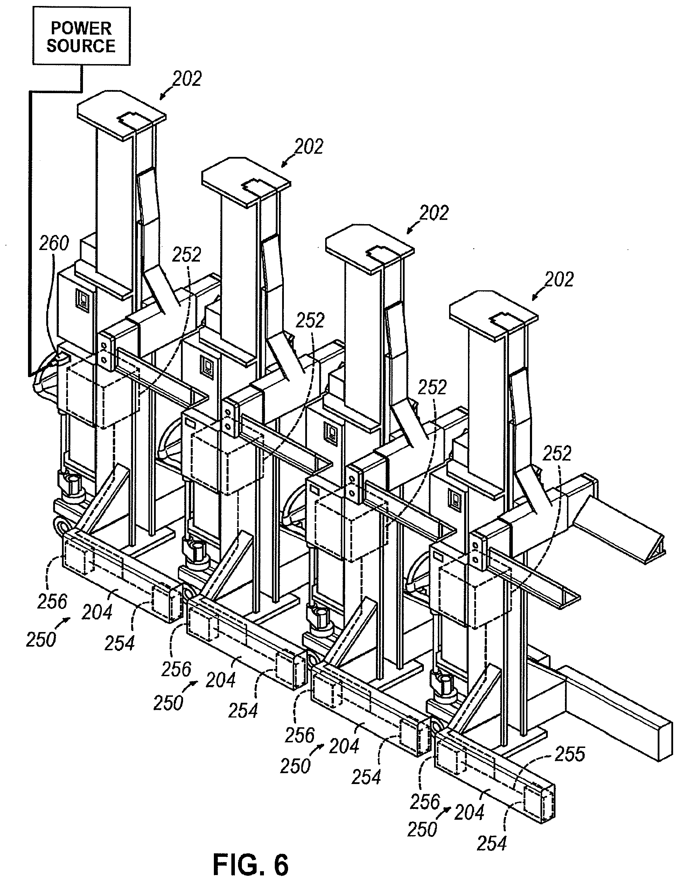

FIG. 5 shows an alternative exemplary lift column (202) that may be readily incorporated into lift system (1) in replacement of lift column (2) described above. Therefore, lift column (202) may be substantially similar to lift column (2) described above, with differences elaborated below. In particular, lift column (202) includes a power assembly (250) configured to couple directly to a power source via an electrical coupling (260), but is also configured to wirelessly charge other lift columns (202) while in a nested configuration (see FIG. 6) via a set of wireless power transceivers (254, 256) associated with a leg (204) of column (202). Therefore, only one lift column (202) needs to be plugged directly into a power source, while the other lift columns (202) the nested configuration are charged wirelessly in a chained fashion.

Therefore, lift column (202) includes legs (204), a hydraulic system (205), a carriage (206), wheels (208), a handle (210), a guidepost (212), a rail (214), a control interface (220), and an indicator (240); which may be substantially similar to legs (4), hydraulic system (5), carriage (6), wheels (8), handle (10), guidepost (12), rail (14), control interface (20), and indicator (40), described above, respectively, with differences elaborated below.

Lift column (202) also includes power assembly (250), which is configured to power some or all of the electrically activated components of lift column (202). Power assembly (250) includes a battery and charging assembly combo (252), a front wireless power transceiver (254) housed within a front portion of leg (204), a rear wireless power transceiver (256) housed within a rear portion of leg (204), an electrical communication lines (255) extending between wireless power transceivers (254, 256) and battery and charging assembly combo (252). Battery and charging assembly combo (252) may be substantially similar to the combination of battery (52) and charging assembly (54) described above, with differences elaborated below.

Battery and charging assembly combo (252) is configured to directly couple to a power source via an electrical coupling (260). Therefore, electrical coupling (260), when plugged directly into battery and charging assembly combo (252), may be configured to charge the battery of battery and charging assembly combo (252) under the control of the charging assembly of the combo (252).

As shown in FIG. 6, while lift columns (202) are stored in an end-to-end nested fashion, the rear wireless power transceiver (256) of one column (202) is directly adjacent to other front wireless power transceiver (252) of an adjacent column (202). Adjacent transceivers (254, 256) are located in close enough proximity to one another such that when lift column (202) are stored in the nested configuration, transceivers (254, 256) may wirelessly transfer power to one another in order to charge power assemblies (250) in a chained fashion. Electrical communication lines (255) extending between transceivers (254, 256) and battery and charging assembly combo (252) of an individual lift column (202) may transfer power between transceivers (254, 256) and battery and charging assembly combo (252) of said lift column (202). Power may flow from a battery and charging assembly combo (252) of a column (2) having a greater charge to a battery and charging assembly combo (252) of another column (2) having a smaller charge. Therefore, once an operator stores columns (202) in the nested fashion shown in FIG. 6, the operator may only have to plug one column (202) into a power source via electrical coupling (260) in order to charge the entire chain of nested columns (202). In other words, directly adjacent wireless power transceivers (254, 256) forming the chain will form the wireless power transmitting connection needed to charge all columns (202) in the nested configuration wirelessly.

In some instances, columns (202) may charge each other wirelessly in the nested configuration even when no columns (202) are plugged directly into a power source via an electrical coupling (260). In such an instance, the columns (202) having a greater charge may be able to use their stored-up electrical potential to charge battery and charging assembly combos (252) of lesser-charged columns (202) via their respective wireless power transceivers (254, 256).

In some instances, columns (202) may be configured to also be charged by a wireless charging mat (64) such that only one column (202) needs to be on a wireless charging mat (64), and the column (202) on mat (64) may then charge the other columns (202) in the nested configuration via wireless power transceivers (254, 256) in a chained fashion.

### III. Example Mobile Lift Column with Halo Indicator Light

As mentioned above, an indicator (40) may be used in order to visually convey a suitable message to those who are working with or around lift system (1). For example, indicator (40) may light up to convey whether locking assembly (13) is in the locked state or the unlocked state, thereby communicating to those working around the lift system (1) whether or not carriages (6) are mechanically supported by locking assembly (13) or supported by hydraulic system (5). However, in some instances, a light source in a particular position on the lift system (1) may not be viewable to those working around the lift system (1) who may benefit from the visual message. For instance, if a person is working under a vehicle (V) that is raised by lift system (1), that person may not be able to visually see the color of light being emitted from an indicator (40) at the top of a lift column (2). Therefore, it may be desirable to have an indicator (40) configured to emit a light in a manner that can be seen by people who are working around lift system (1) but not necessarily in a position to view the light emitted by columns (2).

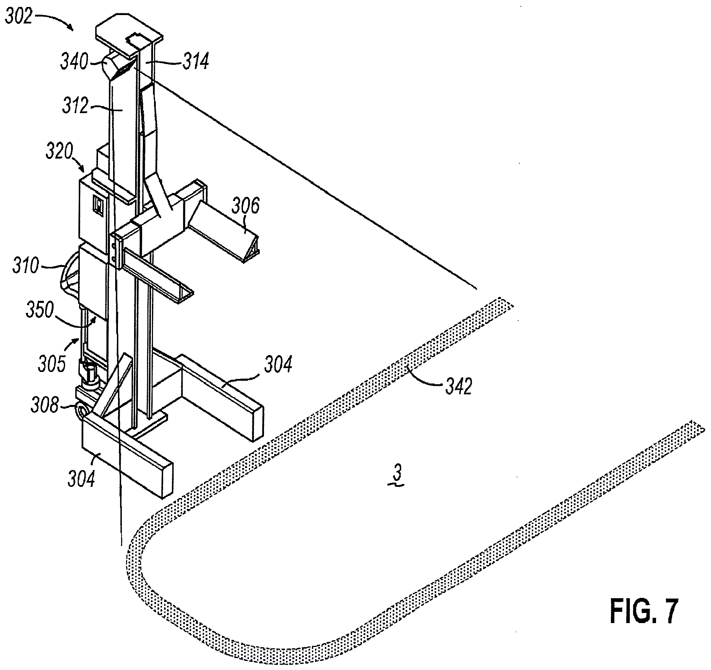

FIG. 7 shows an alternative exemplary lift column (302) that may readily be incorporated into lift system (1) in place of a lift column (2) described above. Therefore, lift column (302) may be substantially similar to lift column (2) described above, with differences elaborated below. In particular, lift column (302) includes a halo light indicator (340) that is configured to project a defined illuminated halo perimeter that may be visually accessible to people in the vicinity and/or people working under a vehicle raised by lift columns (302). Therefore, for example, the halo perimeter may be viewed on the surface from a viewing path that is visually inaccessible to the indicator assembly. The defined illuminated halo perimeter may be configured to convey any suitable message as would be apparent to one skilled in the art in view of the teachings herein.

Therefore, lift column (302) includes legs (304), a hydraulic system (305), a carriage (306), wheels (308), a handle (310), a guidepost (312), a rail (314), a control interface (320), an indicator (340), and a power assembly (350); which may be substantially similar to legs (4), hydraulic system (5), carriage (6), wheels (8), handle (10), guidepost (12), rail (14), control interface (20), indicator (40), and power assembly (50) described above, respectively, with differences elaborated below. Control interface (320) may include a processor similar to processor (21) described above.

As mentioned above, indicator (340) is a halo light configured to project a defined illuminated perimeter (342) on shop floor (3) around a portion of the perimeter of a raised vehicle (V). Therefore, those who may be working under a raised vehicle (V) (or in any other location at which it may be difficult to view a traditional indicator light) may be able to quickly visually determine the visual message that indicator (340) is communicating (e.g., the illuminated perimeter (342)) without having to adjust their current position. The perimeter (342) may be sufficiently defined such that the illumination emitted from halo indicator (340) forms a predetermined shape, such as the shape exemplified in FIG. 7, or may define an outline of the vehicle being serviced, an area of mechanical movement, or an exclusion zone around lift column (2) or a lift system.

In the current example, indicator (340) is located near the top of guidepost (312). However, indicator (340) may be located at any suitable location on column (302) as would be apparent to one skill in the art in view of the teachings herein. For instance, indicator (340) may be positioned along guidepost (312), but closer to legs (304). As another example, indicator (340) may not be positioned on guidepost (312) at all. Additionally, while one indicator (340) is shown, multiple indicators (340) may be placed on column (302) or in the vicinity thereof, either to operate independently or to cooperate to achieve a desired indication.

Additionally, indicators (340) may be configured such that when columns (302) together form subsystems (9) and lift system (1), columns (302) cooperatively project a continuous or near-continuous illuminated perimeter (342) around a lifted vehicle (V). An indicator (340) of a specific column (302) may also project a specific illuminated perimeter (342) geometry depending on various factors, which will be apparent to one skilled in the art in view of the teachings herein. For example, an indicator (340) may project a more arched profiled geometry if said column (302) is located near a front or rear end of a lifted vehicle (V), while an indicator may project a more linear profiled geometry if said column (302) is located between front and rear ends of a lifted vehicle (V). Alternatively, indicator (340) may project a custom illuminated perimeter (342) depending on the vehicle (V) being lifted. The illuminated perimeter (342) may also be used to outline where column (302), subsystem (9), and/or lift system (1) should not be operated remotely.

In instances where column (302) is configured to automatically position itself on shop floor (3) and/or move carriage (306) to a particular vertical position, illuminated perimeter (342) may indicate the direction of automatic movement of column (302) before or during such movement.

Central control module (30) or control interface (320) may communicate to indicator (340) in order to instruct indicator (340) what perimeter or other indication to display. In various embodiments, the indication may convey information by projecting one or more characters, words, symbols, icons, lines, glyphs, shapes, patterns, or other visual elements using one or more sizes, widths, colors, typefaces, patterns, or any other technique that word occur to one skilled in the art in view of this disclosure. The information conveyed may characterize the state of one particular column (2, 302), one or more vehicles (V), one or more lift systems (1), or energy storage/charging components, and it may include other information as well, such as time of day, day of week, logged-in user, or other information as may occur to those skilled in the art in view of this disclosure.

As mentioned above, indicator(s) (340) may convey any suitable message as would be apparent to one skilled in the art in view of the teachings herein. Indicator(s) (340) may convey such a message through displaying different colors, activating with various patterns and/or frequencies, or any other suitable means as would be apparent to one skilled in the art in view of the teachings herein. For example, indicator(s) (340) may light up a first color to indicate when a locking assembly is in the locked state, while indicator(s) (340) may light up a second color to indicate when the locking assembly is in the unlocked state. Further, as another example, indicator(s) (340) may be configured to flash or light up in a third color to indicate an object is obstructing lift system (1). As another example, indicator(s) (340) may activate when any component in the shop is moving and/or lifting to thereby communicate such a component in the shop is moving and/or lifting. For example, indicator(s) (340) may be configured to suitably activate in response to a vehicle entering and/or exiting a determined lifting area of the shop. As another example, indicator(s) (340) may be configured to suitably activate in response to a structure (e.g., a structure indicator(s) (340) are attached to) moving, lifting, suitably activating, suitably deactivating, experiencing an error, or being in any other suitable condition as would be apparent to one skilled in the art in view of the teachings herein.

While in the current example indicator(s) (340) are incorporated into a lift column (302), indicator(s) (340) may be incorporated into any other suitable structures as would be apparent to one skilled in the art in view of the teachings herein. For example, indicator(s) (340) may be readily incorporated into stationary vehicle lifts, such as a stationary two-post vehicle lift, where the indicator(s) (340) might indicate the state and/or movement of all or part of the lift system. As another example, indicator(s) may be incorporated onto an automated robotic device configured to suitably operate on a vehicle. One such example of automated robotic device for which indicators (340) may be incorporated includes those shown and described in U.S. Pat. Pub. No. 2020/0376671, entitled "Automatic Wheel Changer Robot," published on December 3, 2020, which is incorporated by reference herein. In some instances, indicator(s) (340) may simply be placed around shop floor and configured to activate in response to suitable conditions being sensed in the shop by various devices in communication with indicator(s) (340).

### IV. Miscellaneous

It should be understood that any one or more of the teachings, expressions, embodiments, examples, etc. described herein may be combined with any one or more of the other teachings, expressions, embodiments, examples, etc. that are described herein. The above-described teachings, expressions, embodiments, examples, etc. should therefore not be viewed in isolation relative to each other. Various suitable ways in which the teachings herein may be combined will be readily apparent to those of ordinary skill in the art in view of the teachings herein. Such modifications and variations are intended to be included within the scope of the claims.

It should be appreciated that any patent, publication, or other disclosure material, in whole or in part, that is said to be incorporated by reference herein is incorporated herein only to the extent that the incorporated material does not conflict with existing definitions or other disclosure material set forth in this disclosure. As such, and to the extent necessary, the disclosure as explicitly set forth herein supersedes any conflicting material incorporated herein by reference. Any material, or portion thereof, that is said to be incorporated by reference herein, but which conflicts with existing definitions or other disclosure material set forth herein will only be incorporated to the extent that no conflict arises between that incorporated material and the existing disclosure material.

Having shown and described various embodiments of the present invention, further adaptations of the methods and systems described herein may be accomplished by appropriate modifications by one of ordinary skill in the art without departing from the scope of the present invention. Several of such potential modifications have been mentioned, and others will be apparent to those skilled in the art. For instance, the examples, embodiments, geometries, materials, dimensions, ratios, steps, and the like discussed above are illustrative and are not required. Accordingly, the scope of the present invention should be considered in terms of the following claims and is understood not to be limited to the details of structure and operation shown and described in the specification and drawings.

## Claims

1. A lift assembly, comprising:
(a) a control module (30); and
(b) a lifting column (302), comprising:
(i) a carriage (306),
(ii) a lift actuation assembly configured to actuate the carriage (306) between a lowered position and a raised position, and
(iii) an indicator (340) in communication with the control module (30), wherein the indicator (340) is configured to generate a visual indicator on a floor (3) proximate to the lifting column (302) under control of the control module (30).

2. The lift assembly of claim 1, wherein actuating the carriage (306) between a lowered position and a raised position is in response to an instruction received from the control module (30), and wherein the indicator (340) is controlled by the control module (30) as a function of a state of the lifting column (302), wherein the visual indictor comprises a defined illuminated perimeter (342) configured to be viewed on the floor (3).

3. The lift assembly of any of the preceding claims, wherein:
the visual indicator comprises a perimeter around a portion of a vehicle (V) to be lifted by the carriage (306); and
the visual indicator is adapted based on a type of the vehicle (V) to be lifted.

4. The lift assembly of any of the preceding claims, wherein the visual indicator conveys information selected from an information group consisting of:
a state of the lifting column (302);
a state of one or more vehicles;
a state of one or more energy storage or charging components;
a time of day;
a day of week; and
an identity of a person.

5. The lift assembly of any of the preceding claims, wherein the lifting column (302) further comprises a guidepost (312), and wherein the carriage (306) is configured to actuate along the guidepost (312) between the lowered position and the raised position.

6. The lift assembly of any of the preceding claims, wherein the lifting column (302) comprises a mobile-lifting column (302).

7. The lift assembly of any of the preceding claims, wherein the lift actuation assembly comprises a hydraulic system (305).

8. The lift assembly of any of the preceding claims, wherein the indicator (340) is configured to generate the visual indicator in a first color while the locking assembly (13) is activated, and wherein the indicator (340) is configured to generate the visual indicator in a second color while the locking assembly (13) is deactivated.

9. The lift assembly of any of the preceding claims, wherein the indicator (340) is configured to generate the visual indicator in response to a predetermined condition.

10. A device configured to engage a vehicle (V) for maintenance, the device comprising:
(a) a control module (30);
(b) a guidepost (312); and
(c) an indicator (340) attached to the guidepost (312), wherein the indicator (340) is in communication with the control module (30), wherein the indicator (340) is configured to generate a visual indicator on a floor (3) proximate to the guidepost (312) under control of the control module (30), wherein the visual indicator comprises a projected and defined illuminated perimeter.

11. The device of claim 10, wherein the guidepost (312) comprises a vehicle guidepost (312).

12. The device of claim 10, wherein the guidepost (312) is configured to be mobile.
